# EUROPEAN PATENT APPLICATION

(11) **EP 4 838 272 A1**
(43) Date of publication of application: **11.11.2026**
(21) Application number: 25776813.5
(22) Date of filing: 23.01.2025
(51) Int. Cl.: G02B 5/30, G02B 1/115, G02F 1/13

(54) **WAVEPLATE, WAVELENGTH SELECTION SWITCH, OPTICAL BRANCH INSERTION DEVICE, AND METHOD FOR MANUFACTURING WAVEPLATE**

(30) Priority: 25.03.2024 JP 2024047482
(71) Applicant: Dexerials Corporation, Shimotsuke-shi, Tochigi 323-0194 (JP)
(72) Inventor: SUZUKI Yuta, Shimotsuke-shi, Tochigi 323-0194 (JP); SHIBUYA Kazuyuki, Shimotsuke-shi, Tochigi 323-0194 (JP); SASAKI Koji, Shimotsuke-shi, Tochigi 323-0194 (JP)
(74) Representative: Müller-Boré & Partner Patentanwälte PartG mbB
(86) International application number: PCT/JP2025/002058
(87) International publication number: WO 2025/204049

(57) **Abstract**

Provided is a waveplate comprising: a transparent substrate; a pattern layer that is patterned on the transparent substrate; a first cured resin layer that is formed on at least a part of the outer periphery of the pattern layer on the transparent substrate; and a second cured resin layer that is formed in a region on the transparent substrate, said region being further to the inner side than the first cured resin layer where the pattern layer is not formed. The pattern layer has a retardation film.

## Description

### TECHNICAL FIELD

The present invention relates to a wave plate, a wavelength selective switch, an optical add-drop multiplexer, and a method for manufacturing a wave plate.

### BACKGROUND ART

In recent years, traffic in data centers and mobile networks has rapidly increased, and high speed, large capacity, long distance, and reliability have become essential in optical trunk networks supporting them. In order to meet these requirements, a wavelength division multiplexing (WDM) signal is used in optical communication, and a plurality of optical signals can be transmitted by one optical fiber, and as a result, it is possible to increase the capacity of communication without adding an optical fiber. However, there is an issue that reconstructing the configuration of the optical trunk network requires significant costs, and therefore a reconfigurable optical add-drop multiplexer (ROADM) has been developed (for example, see Non-Patent Document 1). The ROADM can remotely select and switch an optimal transmission path of a WDM signal, and is used in optical communication as a technology capable of flexibly reconstructing an optical trunk network. As a key device in the ROADM, a wavelength selective switch (WSS) is exemplified, which has functions of multiplexing and demultiplexing optical signals of different wavelengths and switching paths of the optical signals.

The WSS has, for example, a mechanism in which light incident from an input port is incident on LCOS (liquid crystal on silicon) as a switching element (light beam deflecting element) via a plurality of optical elements, the phase of the incident light is modulated by the LCOS, and the modulated light is incident on any output port. Here, the LCOS that modulates the phase of the incident light has polarization dependency that operates only in a polarized wave of a specific direction, and it is necessary to cause polarized light that can be modulated by the LCOS to be incident. Therefore, the WSS requires a configuration for compensating the polarization state. The WSS includes, for example, a polarization beam splitter that separates incident light from the port array into two linearly polarized lights orthogonal to each other, a wave plate that rotates the direction of one of the linearly polarized lights separated by 90°, and a switching element (light beam deflecting element) that modulates the phase of the incident light and makes it incident on any output port.

In contrast, Patent Document 1 discloses a 1/2 wave plate including a transparent substrate, an optically anisotropic layer containing a birefringent film, and a protective layer that is an atomic layer deposited layer of inorganic compound contacting the optically anisotropic layer.

### Citation List

### Patent Documents

Patent Document 1: Japanese Unexamined Patent Application, Publication No. 2020-12876

### Non-Patent Documents

Non-Patent Document 1: Yuzo Ishii, Naoki Ooba, Akio Sahara, Koichi Hadama, WSS Module Technology for Enhancing the Functionality of ROADM, NTT Technical Journal, November 2013, pages 21-24

### DISCLOSURE OF THE INVENTION

### Problems to be Solved by the Invention

Here, in order to apply the 1/2 wave plate disclosed in Patent Document 1 to a wavelength selective switch, one approach would be to pattern the optically anisotropic layer, but when the surface of the transparent substrate is polished or diced at the time of manufacturing the wave plate, there is a possibility that a birefringent film absorbs moisture and cracks occur.

An object of the present invention is to provide a wave plate capable of suppressing the occurrence of cracks in a retardation film.

### Means for Solving the Problems

(1) A wave plate includes: a transparent substrate; a patterned layer formed on the transparent substrate; a first cured resin layer formed on at least part of an outer periphery of the patterned layer on the transparent substrate; and a second cured resin layer formed in a region where the patterned layer is not formed, on an inner peripheral side of the first cured resin layer on the transparent substrate. The patterned layer includes a retardation film.
(2) In the wave plate according to (1), the patterned layer has a surface covered with a protective film.
(3) In the wave plate according to (1) or (2), the patterned layer further includes an anti-reflection film disposed between the retardation film and the transparent substrate.
(4) The wave plate according to any one of (1) to (3) further includes a second transparent substrate disposed on a side opposite to the transparent substrate with respect to the first cured resin layer and the second cured resin layer.
(5) The wave plate according to (4) further includes an anti-reflection film disposed between the first cured resin layer and the second transparent substrate, and between the second cured resin layer and the second transparent substrate.
(6) A wavelength selective switch includes the wave plate according to any one of (1) to (5).
(7) An optical add-drop multiplexer includes the wavelength selective switch according to (6).
(8) A method for manufacturing the wave plate according to any one of (1) to (5). The method includes: forming a precursor of the patterned layer on the transparent substrate; laser processing the precursor of the patterned layer to form the patterned layer; and forming the first cured resin layer in at least the part of the outer periphery on the transparent substrate and forming the second cured resin layer in the region where the patterned layer is not formed, on the inner peripheral side of the first cured resin layer on the transparent substrate. The retardation film is formed when the precursor of the patterned layer is formed.
(9) In the method for manufacturing the wave plate according to (8), an anti-reflection film and the retardation film are sequentially formed when the precursor of the patterned layer is formed. The method further includes: disposing a second transparent substrate on a side opposite to the transparent substrate with respect to the first cured resin layer and the second cured resin layer; and forming an anti-reflection film between the first cured resin layer and the second transparent substrate, and between the second cured resin layer and the second transparent substrate.

### Effects of the Invention

According to the present invention, it is possible to provide a wave plate capable of suppressing the occurrence of cracks in a retardation film.

### BRIEF DESCRIPTION OF THE DRAWINGS

FIG. 1 is a cross-sectional view showing a wave plate according to an embodiment of the present invention;
FIG. 2 is a cross-sectional view illustrating a method for manufacturing the wave plate of FIG. 1;
FIG. 3 is a top view illustrating the method for manufacturing the wave plate of FIG. 1;
FIG. 4 is a cross-sectional view illustrating the method for manufacturing the wave plate of FIG. 1;
FIG. 5 is a top view showing a modification of the shape of a first recess of FIG. 3;
FIG. 6 is a top view showing a modification of the shape of the first recess of FIG. 3;
FIG. 7 is a schematic diagram showing part of a wavelength selective switch including the wave plate of FIG. 1;
FIG. 8 is a top view illustrating a method for manufacturing a test specimen used in an Example; and
FIG. 9 is a cross-sectional view showing a precursor of the test specimen used in the Example.

### PREFERRED MODE FOR CARRYING OUT THE INVENTION

Hereinafter, embodiments of the present invention will be described with reference to the drawings.

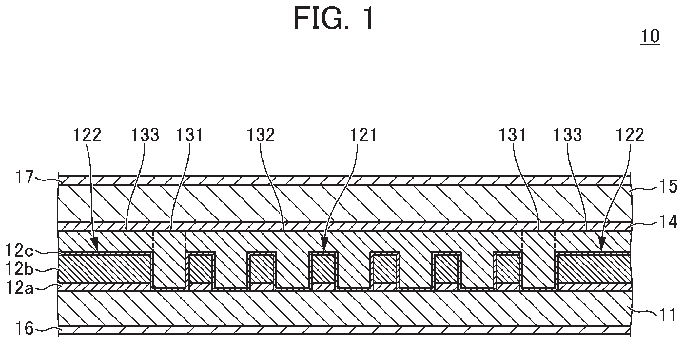

FIG. 1 shows a wave plate according to an embodiment of the present invention.

A wave plate 10 includes a transparent substrate 11, a patterned layer 121 formed on the transparent substrate 11, a first cured resin layer 131 formed on the outer periphery of the patterned layer 121 on the transparent substrate 11, and a second cured resin layer 132 formed in a region where the patterned layer 121 is not formed, on the inner peripheral side of the first cured resin layer 131 on the transparent substrate 11. Here, the second cured resin layer 132 is also formed on the patterned layer 121. In the patterned layer 121, an anti-reflection film 12a disposed on the transparent substrate 11 and a retardation film 12b are sequentially laminated, and the surface of the patterned layer 121 is covered with a protective film 12c. Here, the surface of the region where the patterned layer 121 is not formed on the transparent substrate 11 is also covered with the protective film 12c. Further, a non-patterned layer 122 is formed on the outer peripheral side of the first cured resin layer 131 on the transparent substrate 11. Similarly to the patterned layer 121, in the non-patterned layer 122, the anti-reflection film 12a disposed on the transparent substrate 11 and the retardation film 12b are sequentially laminated, and the surface of the non-patterned layer 122 is covered with the protective film 12c. A third cured resin layer 133 is formed on the non-patterned layer 122. In the wave plate 10, an anti-reflection film 14 and a transparent substrate 15 are sequentially laminated on the first cured resin layer 131, the second cured resin layer 132, and the third cured resin layer 133. In the wave plate 10, anti-reflection films 16 and 17 are respectively formed on the surfaces of the transparent substrates 11 and 15 on the sides not facing the anti-reflection films 12a and 14. This improves the light transmittance of the wave plate 10 in the used band.

The first cured resin layer 131 may be formed on part of the outer periphery of the patterned layer 121 on the transparent substrate 11.

The retardation film 12b includes columnar portions and a void portion provided between the columnar portions, and is formed by oblique vapor deposition of a dielectric material (for example, see Patent Document 1). The refractive index of the dielectric material is not particularly limited, but is, for example, 1.5 or more. The dielectric material is not particularly limited, and examples thereof include Ta₂O₅, TiO₂, SiO₂, Al₂O₃, NbO₅, and MaF₂, and two or more kinds thereof may be used in combination. Among these, Ta₂O₅ having a refractive index of 2.25 is preferable. Any phase difference can be set by adjusting the film thickness of the retardation film 12b.

The protective film 12c suppresses penetration of moisture into the retardation film 12b and stabilizes optical characteristics. The material constituting the protective film 12c is not particularly limited, and examples thereof include a dielectric material such as SiO₂. The film thickness of the protective film 12c is not particularly limited, but is, for example, 30 nm or more and 3 µm or less. The method of forming the protective film 12c is not particularly limited, and examples thereof include chemical vapor deposition, plasma assisted deposition, and sputtering.

The shape of the pattern of the patterned layer 121 is set according to the application of the wave plate 10. For example, when the wave plate 10 is applied to a wavelength selective switch, the shape of the pattern of the patterned layer 121 is not particularly limited as long as it rotates the polarization direction of one polarization component separated from the incident light by 90° and does not change the polarization direction of the other polarization component.

The transparent substrates 11 and 15 are not particularly limited as long as the function as a wave plate can be maintained for light in the used band. The light transmittance of the transparent substrates 11 and 15 in the used band is, for example, 92% or more. The wavelength of the light in the used band is not particularly limited, but is, for example, 250 nm or more and 1700 nm or less. The light in the used band is preferably infrared light. The refractive index of the transparent substrates 11 and 15 is not particularly limited, but is, for example, 1.1 or more and 2.2 or less. The material constituting the transparent substrates 11 and 15 is not particularly limited, and examples thereof include glass such as quartz glass and white plate glass. The average thickness of the transparent substrates 11 and 15 is not particularly limited, but is, for example, 0.1 mm or more and 1.0 mm.

The cured resins constituting the first cured resin layer 131, the second cured resin layer 132, and the third cured resin layer 133 are materials transparent to light at wavelengths in the above-described used band, and preferably have a refractive index equal to that of the transparent substrates 11 and 15. The first cured resin layer 131, the second cured resin layer 132, and the third cured resin layer 133 are formed by curing, for example, a photocurable resin or a thermosetting resin. This improves the mechanical properties of the retardation film 12b. Examples of commercially available ultraviolet curable resins include the optical adhesive NOA61 (manufactured by Norland), which has a refractive index of 1.56 (typical value) in its cured state.

The cured resins constituting the first cured resin layer 131, the second cured resin layer 132, and the third cured resin layer 133 may be the same or different.

The anti-reflection films 12a, 14, 16, and 17 are formed by alternately laminating two types of dielectric materials having different refractive indexes, for example. The dielectric materials are not particularly limited, and examples thereof include TiO₂, SiO₂, Ta₂O₅, Al₂O₃, CeO₂, ZrO₂, ZrO, Nb₂O₅, and HfO₂. Among these, a combination of SiO₂ and Nb₂O₅ and a combination of TiO₂ and SiO₂ are preferable. The number of layers of each of the anti-reflection films 12a, 14, 16, and 17 is not particularly limited, but is, for example, 2 or more and 40 or less.

Next, a method for manufacturing the wave plate 10 will be described.

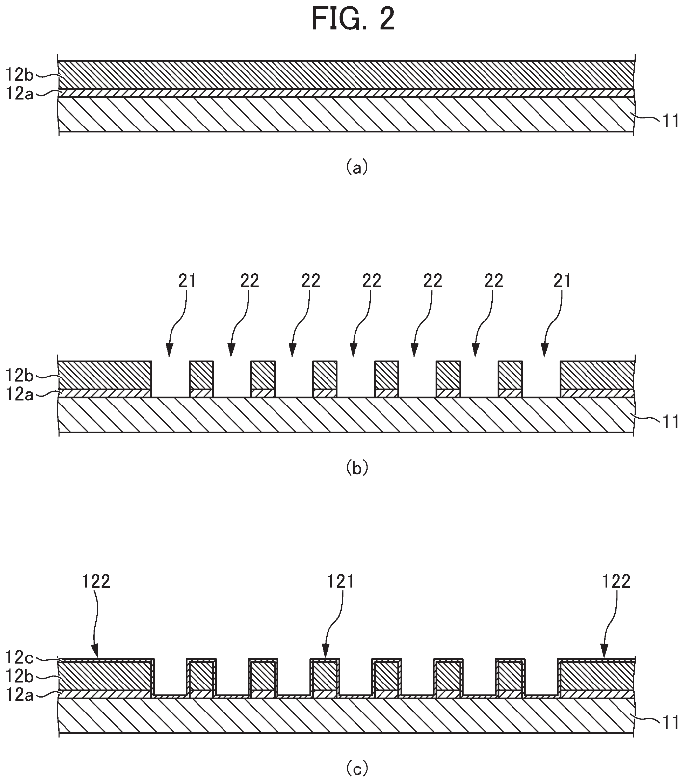

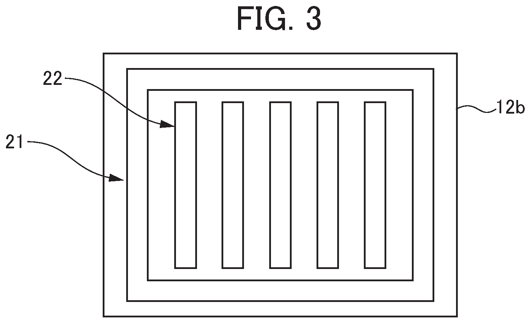

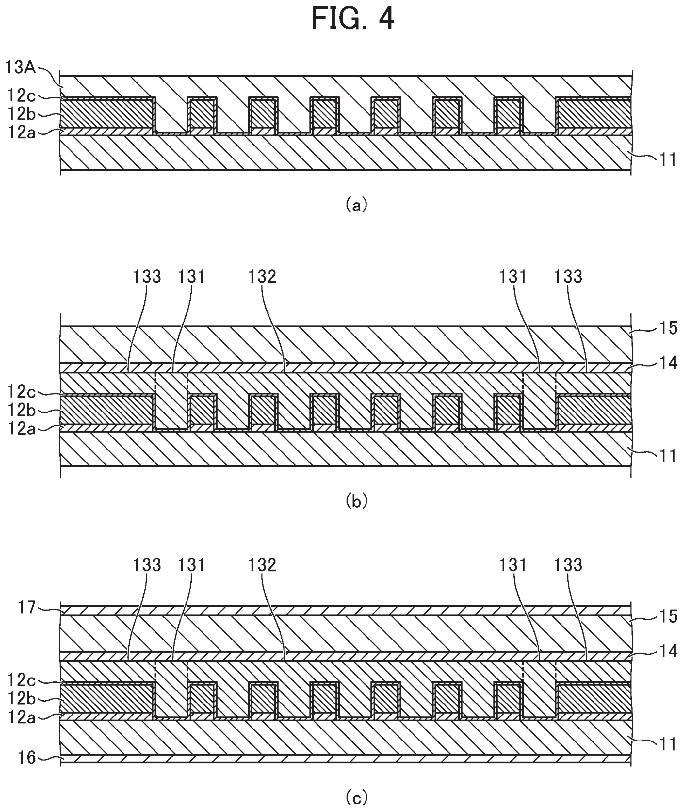

First, the transparent substrate 11 is cleaned, and then on the transparent substrate 11, the anti-reflection film 12a and the retardation film 12b as a precursor of the patterned layer 121 and the non-patterned layer 122 are sequentially formed (see FIG. 2(a)). At this time, an annealing treatment may be performed at a temperature of 100°C or higher in order to evaporate moisture present in the void portion of the retardation film 12b. Next, the anti-reflection film 12a and the retardation film 12b are subjected to laser processing to form a first recess 21 having a hollow rectangular shape in top view and second recesses 22 each having a rectangular shape in top view and disposed on the inner peripheral side of the first recess 21, thereby forming a pattern of the anti-reflection film 12a and the retardation film 12b (see FIGS. 2(b) and 3). Here, the first recess 21 and the second recess 22 are regions in which the first cured resin layer 131 and the second cured resin layer 132 are formed, respectively. At this time, since the degree of freedom of processing is high and the thermal influence on the workpiece is small, it is preferable to use an ultrashort pulse laser. Next, the protective film 12c is formed on the surfaces of the laser-processed anti-reflection film 12a and retardation film 12b to form the patterned layer 121 and the non-patterned layer 122 (see FIG. 2(c)). This suppresses penetration of moisture into the void portion of the retardation film 12b. Next, the first recess 21 and the second recesses 22 are filled with a photocurable resin or thermosetting resin 13A (see FIG. 4(a)). At this time, the photocurable resin or thermosetting resin 13A is also formed on the patterned layer 121 and the non-patterned layer 122. Further, the transparent substrate 15 on which the anti-reflection film 14 is formed in advance is bonded to the photocurable resin or thermosetting resin 13A, and then the photocurable resin or thermosetting resin 13A is cured to form the first cured resin layer 131, the second cured resin layer 132, and the third cured resin layer 133 (see FIG. 4(b)). At this time, the thicknesses of the transparent substrates 11 and 15 are adjusted by polishing the surfaces of the transparent substrates 11 and 15. When the first cured resin layer 131 is not formed, the retardation film 12b constituting the patterned layer 121 absorbs moisture and cracks are likely to occur. Next, the anti-reflection films 16 and 17 are respectively formed on the surfaces of the transparent substrates 11 and 15 (see FIG. 4(c)). Finally, in order to obtain the wave plate 10, dicing is performed. When the first cured resin layer 131 is not formed, the retardation film 12b constituting the patterned layer 121 absorbs moisture and cracks are likely to occur.

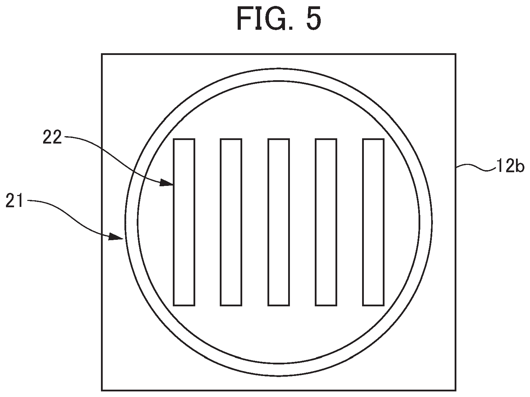

The shape of the first recess 21 is not limited to a hollow rectangular shape in top view as long as moisture absorption by the retardation film 12b constituting the patterned layer 121 can be suppressed by the first cured resin layer 131 and the first recess 21 can be formed on the outer periphery of the patterned layer 121, and may be, for example, a hollow circular shape in top view (for example, see FIG. 5).

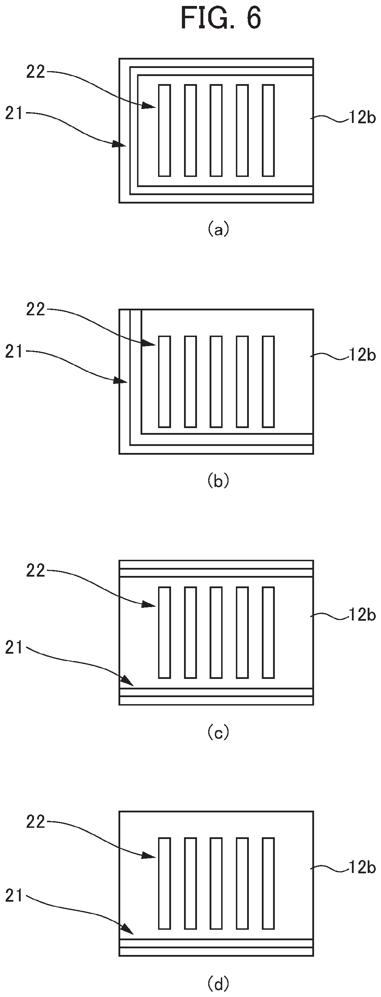

In a case where the retardation film 12b absorbs moisture only from a specific direction, the first recess 21 may be formed in part of the outer periphery surrounding the second recesses 22 (for example, see FIGS. 6(a) to 6(d)).

Alternatively, after the first recess 21 and the second recesses 22 are filled with the photocurable resin or thermosetting resin 13A, the photocurable resin or thermosetting resin 13A may be cured to form the first cured resin layer 131, the second cured resin layer 132, and the third cured resin layer 133, without bonding the transparent substrate 15 on which the anti-reflection film 14 is formed in advance. In this case, for example, after the anti-reflection film 14 is formed on the first cured resin layer 131, the second cured resin layer 132, and the third cured resin layer 133, it is bonded to the transparent substrate 15.

The wave plate 10 can be applied to, for example, a wavelength selective switch.

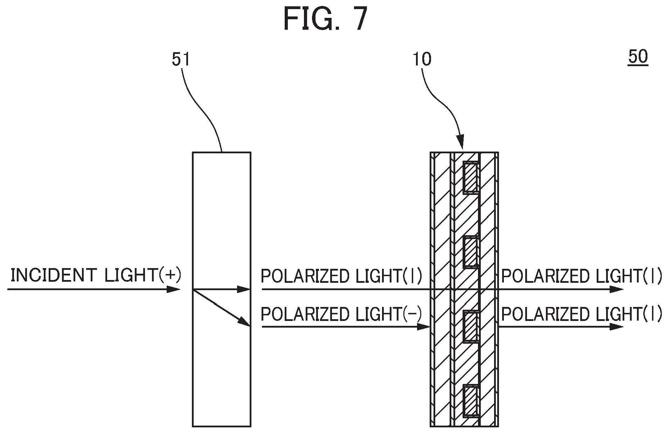

FIG. 7 shows part of a wavelength selective switch including the wave plate 10.

A wavelength selective switch 50 includes a polarization beam splitter 51 that separates incident light from the optical port array into two linearly polarized lights orthogonal to each other, and the wave plate 10 that rotates the direction of one of the separated linearly polarized lights by 90° and converts the polarized light into polarized light that can be modulated by the LCOS. At this time, one of the linearly polarized lights separated by the polarization beam splitter 51 passes through the retardation film 12b, and the polarization direction thereof is rotated by 90°. On the other hand, since the other polarized light separated by the polarization beam splitter 51 does not pass through the retardation film 12b, the polarization direction does not change.

Note that the two orthogonal linearly polarized lights separated by the polarization beam splitter 51 mean polarized lights whose electric field oscillations are parallel and perpendicular to the plane of incidence, respectively. Polarized light whose electric field oscillations are parallel to the plane of incidence is defined as P-polarized light, and polarized light whose electric field oscillations are perpendicular to the plane of incidence is defined as S-polarized light. Here, the plane of incidence is a plane that is perpendicular to the reflecting plane and that contains the incident light beam and the reflected light beam.

The wavelength selective switch 50 can be applied to, for example, an optical add-drop multiplexer.

Although the embodiments of the present invention have been described above, the present invention is not limited to the above-described embodiments, and the above-described embodiments may be modified as appropriate within the scope of the gist of the present invention. For example, at least part of the anti-reflection films 12a, 14, 16, and 17 and the protective film 12c may be omitted. Note that the first cured resin layer 131 may be applied to a wave plate in which only a patterned layer including a retardation film exists and the second cured resin layer 132 does not exist on the inner peripheral side of the first cured resin layer 131.

### EXAMPLES

Hereinafter, an Example of the present invention will be described, but the present invention is not limited to the Example. In the present Example, a test specimen simulating the wave plate 10 was used to evaluate cracks in the retardation film 12b.

### (Preparation of Test Specimen)

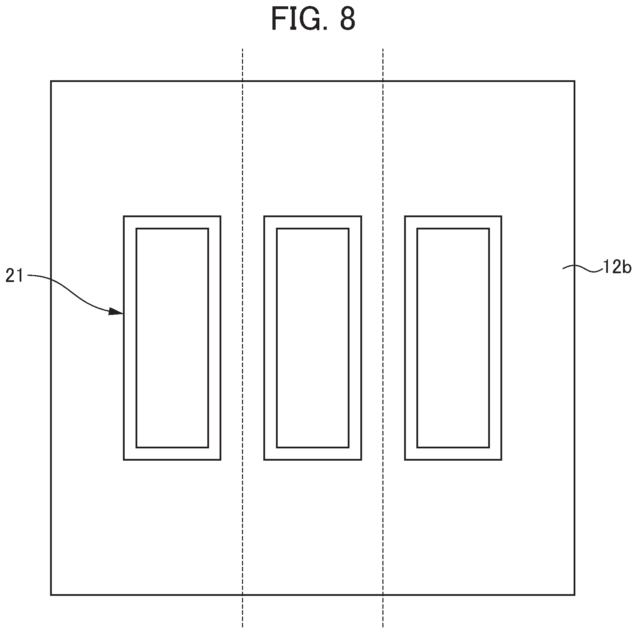

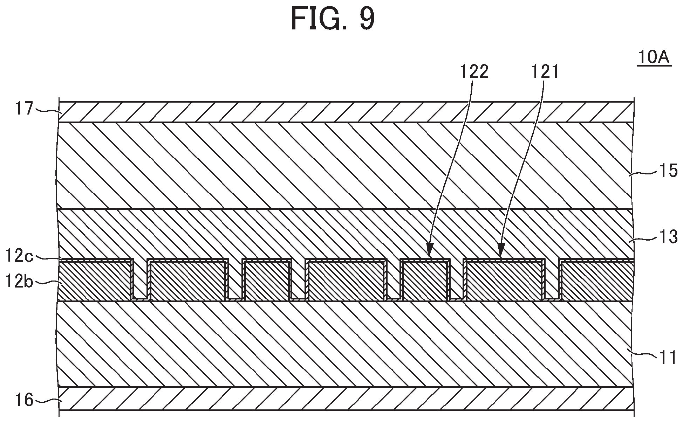

First, after cleaning a glass substrate as the transparent substrate 11, the retardation film 12b (Ta₂O₅ film) as a precursor of the patterned layer 121 and the non-patterned layer 122 was formed on the transparent substrate 11. At this time, an annealing treatment was performed at a temperature of 100°C or higher in order to evaporate moisture present in the void portion of the retardation film 12b. Next, the retardation film 12b was subjected to laser processing using an ultrashort pulse laser to form the first recess 21 having a hollow rectangular shape in top view, thereby forming a pattern of the retardation film 12b (see FIG. 8). Here, the first recess 21 is a region in which a cured resin layer 13 is formed. Next, the protective film 12c (SiO₂ film) was formed on the surface of the laser-processed retardation film 12b to form the patterned layer 121 and the non-patterned layer 122. Next, the first recess 21 was filled with a photocurable resin. At this time, the photocurable resin was also formed on the patterned layer 121 and the non-patterned layer 122. Further, after a glass substrate as the transparent substrate 15 was bonded to the photocurable resin, the photocurable resin was photocured to form a cured resin layer 13. At this time, the surfaces of the transparent substrates 11 and 15 were polished to adjust the thicknesses of the transparent substrates 11 and 15. Next, the anti-reflection films 16 and 17 (alternating laminated films of TiO₂ and SiO₂) were formed on the surfaces of the transparent substrates 11 and 15 to obtain a precursor 10A of a test specimen (see FIG. 9). Finally, the precursor 10A of the test specimen was diced along the broken line shown in FIG. 8 to obtain the test specimens.

### (Cracks in Retardation Film)

When the retardation film 12b was observed after the surfaces of the transparent substrates 11 and 15 were polished, cracks did not occur in the retardation film 12b formed on the inner peripheral side of the first recess 21 in which the cured resin layer 13 was formed, and cracks occurred in part of the retardation film 12b formed on the outer peripheral side of the first recess 21 in which the cured resin layer 13 was formed. When the retardation film 12b was observed after dicing the precursor 10A of the test specimen, cracks did not occur in the retardation film 12b formed on the inner peripheral side of the cured resin layer 13, and cracks occurred in part of the retardation film 12b formed on the outer peripheral side of the cured resin layer 13. From the above, it can be seen that the occurrence of cracks in the retardation film 12b formed on the inner peripheral side of the cured resin layer 13 is suppressed.

### EXPLANATION OF REFERENCE NUMERALS

10 wave plate
11, 15 transparent substrate
121 patterned layer
122 non-patterned layer
12a, 14, 16, 17 anti-reflection film
12b retardation film
12c protective film
131 first cured resin layer
132 second cured resin layer
133 third cured resin layer
13A photocurable resin or thermosetting resin
21 first recess
22 second recess
50 wavelength selective switch
51 polarization beam splitter

## Claims

1. A wave plate comprising:
a transparent substrate;
a patterned layer formed on the transparent substrate;
a first cured resin layer formed on at least part of an outer periphery of the patterned layer on the transparent substrate; and
a second cured resin layer formed in a region where the patterned layer is not formed, on an inner peripheral side of the first cured resin layer on the transparent substrate,
the patterned layer comprising a retardation film.

2. The wave plate according to claim 1, wherein the patterned layer has a surface covered with a protective film.

3. The wave plate according to claim 1 or 2, wherein the patterned layer further comprises an anti-reflection film disposed between the retardation film and the transparent substrate.

4. The wave plate according to claim 1 or 2, further comprising a second transparent substrate disposed on a side opposite to the transparent substrate with respect to the first cured resin layer and the second cured resin layer.

5. The wave plate according to claim 4, further comprising an anti-reflection film disposed between the first cured resin layer and the second transparent substrate, and between the second cured resin layer and the second transparent substrate.

6. A wavelength selective switch comprising the wave plate according to claim 1 or 2.

7. An optical add-drop multiplexer comprising the wavelength selective switch according to claim 6.

8. A method for manufacturing the wave plate according to claim 1 or 2, the method comprising:
forming a precursor of the patterned layer on the transparent substrate;
laser processing the precursor of the patterned layer to form the patterned layer; and
forming the first cured resin layer in at least the part of the outer periphery on the transparent substrate and the second cured resin layer in the region where the patterned layer is not formed, on the inner peripheral side of the first cured resin layer on the transparent substrate,
wherein the retardation film is formed when the precursor of the patterned layer is formed.

9. The method for manufacturing the wave plate according to claim 8,
wherein an anti-reflection film and the retardation film are sequentially formed when the precursor of the patterned layer is formed,
the method further comprising:
disposing a second transparent substrate on a side opposite to the transparent substrate with respect to the first cured resin layer and the second cured resin layer; and
forming an anti-reflection film between the first cured resin layer and the second transparent substrate, and between the second cured resin layer and the second transparent substrate.
